# EUROPÄISCHE PATENTSCHRIFT

(11) **EP 1 794 976 B1**
(45) Veröffentlichungstag und Bekanntmachung des Hinweises auf die Patenterteilung: **24.06.2009**
(21) Anmeldenummer: 05784534.9
(22) Anmeldetag: 31.08.2005
(51) Int. Cl.: H04L 29/06, H04M 7/00

(54) **VERFAHREN UND ENDGERÄT ZUM STEUERN VON MULTIMEDIAVERBINDUNGEN**
METHOD AND TERMINAL FOR CONTROLLING MULTIMEDIA CONNECTIONS
PROCEDE ET TERMINAL DE COMMANDE DE CONNEXIONS MULTIMEDIA

(30) Priorität: 30.09.2004 DE 102004047743
(43) Veröffentlichungstag der Anmeldung: 13.06.2007
(73) Patentinhaber: SIEMENS AKTIENGESELLSCHAFT, 80333 München (DE)
(72) Erfinder: FARTMANN, Alfons, 85748 Garching (DE); WILLE, Klaus, 81679 München (DE)
(74) Vertreter: Fritzsche, Thomas
(86) Internationale Anmeldenummer: PCT/EP2005/054287
(87) Internationale Veröffentlichungsnummer: WO 2006/034938

(56) Entgegenhaltungen:
- EP-A- 0 999 712
- WO-A-02/052825
- US-B1- 6 438 599
- TOGA J ET AL: "ITU-T standardization activities for interactive multimedia communications on packet-based networks: H.323 and related recommendations" COMPUTER NETWORKS, ELSEVIER SCIENCE PUBLISHERS B.V., AMSTERDAM, NL, Bd. 31, Nr. 3, 11. Februar 1999 (1999-02-11), Seiten 205-223, XP004304599 ISSN: 1389-1286

## Beschreibung

In zeitgemäßen Telefonnetzen stehen für angeschlossene Endgeräten eine Vielzahl vermittlungstechnischer Leistungsmerkmale, wie z.B. Rückfrage, Makeln, Transfer, etc., zur Verfügung, die durch an einer jeweiligen Verbindung beteiligte Netzknoten oder Vermittlungseinrichtungen gesteuert werden. Derartige Telefonnetze setzen sich häufig in heterogener Weise aus verschiedenen Teilnetzen und/oder Netzabschnitten zusammen, die sich hinsichtlich ihrer Verbindungsleitungstypen unterscheiden. So können als Verbindungsleitungen z.B. analoge Telefonleitungen, ISDN-basierte TDM-Leitungen (TDM: Time Division Multiplexing) oder internetprotokollbasierte LAN- oder WAN-Verbindungen (LAN: Local Area Network; WAN: wide area network) vorgesehen sein.

Ein derartiges Kommunikationsnetz kann außer zur Sprachkommunikation in der Regel auch für weitere Nutzinformationsdienste, z.B. Fax oder Datendienste genutzt werden. Bei heterogenen Telefonnetzen ist die hierbei zu übertragende Nutzinformation für jeden an einer Verbindung beteiligten Netzabschnitt in eine dem jeweiligen Verbindungsleitungstyp dieses Netzabschnitts entsprechende Übertragungsform, z.B. in Analog- oder TDM-Signale oder in Internetprotokoll-Datenpakete, zu konvertieren und in den beteiligten Vermittlungseinrichtungen der Netzabschnitte zu vermitteln.

Häufig tritt jedoch, insbesondere bei datenintensiven Nutzinformationsdiensten, wie z.B. Multimediadiensten und insbesondere Videodiensten, der Fall auf, dass zumindest ein an der Übertragung beteiligter Netzabschnitt, z.B. ein Analog- oder TDM-Abschnitt, oder eine Vermittlungseinrichtung, z.B. ein 64kBit-Koppelfeld, keine geeignete Konvertierung bzw. Vermittlung erlaubt. Derartige Nutzinformationsdienste können in einem solchen Kommunikationsnetz nicht ohne Weiteres genutzt werden.

Gemäß dem bekannten Stand der Technik kann zur Unterstützung von Multimediadiensten vorgesehen sein, bestehende Sprachkommunikationsnetze in allen Netzabschnitten, allen Vermittlungseinr-ichtungen und in allen Leistungsmerkmalesteuerungen entsprechend den Übertragungsanforderungen der Multimediadienste zu erweitern. Dies erfordert jedoch in vielen Fällen und insbesondere bei öffentlichen Kommunikationsnetzen einen erheblichen Aufwand.

Alternativ dazu kann neben einem vorhandenen, nicht multimediafähigen Kommunikationsnetz, z.B. einem Telefonnetz, ein zusätzliches Kommunikationsnetz implementiert werden, das Multimediadienste, wie z.B. Videodienste unterstützt. In einem solchen zusätzlichen Kommunikationsnetz sind jedoch, die vom vorhandenen Kommunikationsnetz bereitgestellten Leistungsmerkmale nicht ohne Weiteres verfügbar.

Aus dem Dokument EP 999 712 A2 ist ein System zum Aufbau von Multimedia-Verbindungen bekannt, bei dem neben einer Sprachwerbindung über ein herkömmliches Telefonnetz ein weiterer Übertragungskanal über ein Datennetz aufgebaut wird, über den Nicht-Sprachdaten übertragen werden. Das beschriebene System erfordert jedoch, das die beteiligten Endgeräte kompatible Multlmedia-Leistungsmerkmale aufweisen.

Ein Überblick über Multimediakommunikation im Rahmen des ITU-T-Standards H.323 wird in dem Artikel "ITU-T standardization activities for interactive multimedia communications on packet-based networks: H.323 and related recommendations" von J. Toga und J. Ott in Computer Networks, Elseyier Science Publishers B.V, Amsterdam, Bd. 31, Nr. 3, Seiten 205-223 gegeben.

Es ist Aufgabe der vorliegenden Erfindung ein Verfahren zum Steuern von Multimediaverbindungen anzugeben, das eine einfache Steuerung von Leistungsmerkmalen erlaubt. Es ist weiterhin Aufgabe der Erfindung ein Endgerät zur Durchführung des Verfahrens anzugeben.

Gelöst wird diese Aufgabe durch ein Verfahren mit Merkmalen des Patentanspruchs 1 sowie durch ein Endgerät mit den Merkmalen des Patentanspruchs 5.

Mittels der Erfindung können Multimediaverbindungen, z.B. Verbindungen zur Übertragung von Video- und/oder Anwendungdaten, zwischen Endgeräten, die an ein erstes Kommunikationsnetz mit einer Leistungsmerkmalsteuerung sowie an ein zweites Kommunikationsnetz zur Übertragung von Multimediadaten gekoppelt sind, auf einfache Weise gesteuert werden.

Das erste Kommunikationsnetz kann hierbei z.B. durch ein zumindest teilweise leitungsvermitteltes Kommunikationsnetz mit Analog- oder TDM-Übertragungsstrecken realisiert sein. Das zweite Kommunikationsnetz kann beispielsweise ein paketvermitteltes, vorzugsweise internetprotokoll-basiertes Kommunikationsnetz, insbesondere ein LAN, Wander das Internet sein.

Es ist vorgesehen, dass die Leistungsmerkmalssteuerung bei Aktivierung eines vermittlungstechnischen Leistungsmerkmals, wie z.B. Verbindungsaufbau, Rückfrage, Makeln oder Transfer, eine Grundverbindung über das erste Kommunikationsnetz zwischen einem ersten Endgerät und einem zweiten Endgerät steuert. Unter dieser Steuerung sei insbesondere ein Aufbau, ein Abbau oder eine sonstige Steuerung der Grundverbindung verstanden. Erfindungsgemäß wird im Rahmen der Grundverbindung eine das erste Endgerät im zweiten Kommunikationsnetz identifizierende Adressinformation, z.B. eine Internetprotokoll-Adresse, sowie eine Multimediainformation zum zweiten Endgerät übermittelt. Daraufhin wird - vorzugsweise durch das zweite Endgerät - abhängig von einer Multimediabefähigung des zweiten Endgerätes, von der übermittelten Multimediainformation sowie von der Steuerung der Grundverbindung anhand der übermittelten Adressinformation eine endgerätegesteuerte Multimediaverbindung über das zweite Kommunikatiohsnetz zwischen dem ersten und dem zweiten Endgerät gesteuert. Auch unter dieser Steuerung sei insbesondere ein Aufbau, ein Abbau oder eine sonstige Steuerung der Multimediayerbindung verstanden. Weiterhin ist vorgesehen, dass im Falle eines Aufbaus der Multimediaverbindung eine zu übertragende Nutzinformation über diese Multimediaverbindung übertragen wird, und dass im Falle eines Nichtaufbaus oder eines Abbaus der Multimediaverbindung die Nutzinformation reduziert wird und die reduzierte Nutzinformation über die Grundverbindung übertragen wird. Auf diese Weise kann für den Fall, dass eine geeignete Multimediaverbindung nicht verfügbar ist, zumindest eine reduzierte Kommunikationsverbindung zwischen den beteiligten Endgeräten genutzt werden.

Mittels der Erfindung lassen sich vermittlungstechnische Leistungsmerkmale des ersten Kommunikationsnetzes auf einfache Weise für Multimediaverbindungen nutzen. So können durch Aktivierung von Leistungsmerkmalen im ersten Kommunikationsnetz, in deren Rahmen Grundverbindungen zwischen Endgeräten auf- oder abgebaut werden, Multimediaverbindungen zwischen diesen Endgeräten über das zweite Kommunikationsnetz automatisch in paralleler Weise auf- bzw. abbauen. Auf diese Weise können Multimediaverbindungen im zweiten Kommunikationsnetz durch im ersten Kommunikationsnetz verfügbare Leistungsmerkmale, gewissermaßen indirekt gesteuert werden.

Ein weiterer Vorteil der Erfindung ist darin zu sehen, dass deren Implementierung nur geringfügige Modifikationen an den beteiligten Endgeräten erfordert.

Vorteilhafte Ausführungsformen und Weiterbildungen der Erfindung sind in den abhängigen Ansprüchen angegeben.

Nach einer vorteilhaften Ausführungsform der Erfindung kann vorgesehen sein, dass ein Aufbau der Grundverbindung durch die Leistungsmerkmalsteuerung einen Aufbau der Multimediaverbindung - vorzugsweise durch das zweite Endgerät - bewirkt, und dass die Grundverbindung nach Aufbau der Multimediaverbindung zum Aktivieren weiterer Leistungsmerkmale bestehen bleibt.

Weiterhin können das erste und das zweite Kommunikationsnetz durch das erste oder zweite Endgerät als logisch verschiedene Kommunikationsnetze angesteuert werden, obwohl beide Kommunikationsnetze gemeinsame Übertragungsstrecken oder Teilstrecken aufweisen können.

Vorzugsweise kann durch die Multimediainformation eine Multimediabefähigung des ersten Endgerätes, eine Dienstgüteanforderung für die Multimediaverbindung, ein Multimediatyp der Multimediaverbindung und/oder eine für die Multimediaverbindung erforderliche Multimediabefähigung des zweiten Endgerätes spezifiziert werden. Damit kann das zweite Endgerät durch Vergleich seiner eigenen Multimediabefähigung mit der empfangenen Multimediainformation entscheiden, ob und gegebenenfalls mit welchen Optionen die Multimediaverbindung aufzubauen ist.

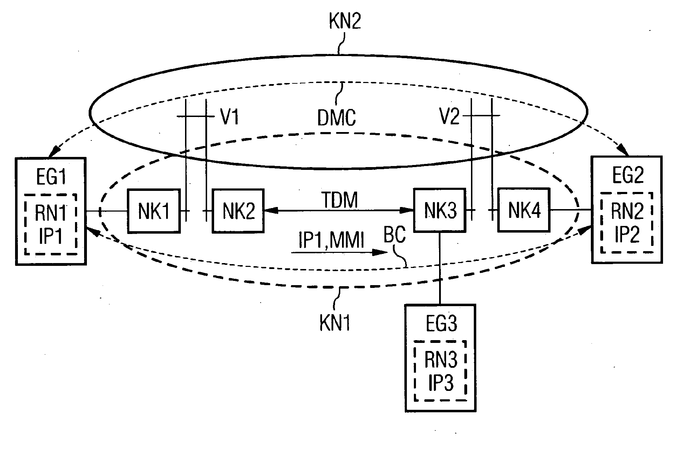

Ein Ausführungsbeispiel der Erfindung wird nachfolgend anhand der Zeichnung näher erläutert.

Die Figur zeigt in schematischer Darstellung ein Kommunikationssystem mit jeweils über zwei Kommunikationsnetze gekoppelten Endgeräten.

In der Figur ist ein Kommunikationssystem schematisch dargestellt, bei dem multimediafähige, z.B. videofähige Endgeräte EG1, EG2 und EG3 jeweils an ein Kommunikationsnetz KN1 sowie an ein Kommunikationsnetz KN2 gekoppelt sind. Das Kommunikationsnetz KN2 ist im vorliegenden Ausführungsbeispiel durch ein paketvermitteltes, vorzugsweise internetprotokollbasiertes Kommunikationsnetz, z.B. durch ein LAN, WAN oder das Internet, realisiert, das eine Übertragung von Multimediadaten.als Nutzinformation im Rahmen eines vorgegebenen Multimediadienstes unterstützt. Das Kommunikationsnetz KN1 ist im vorliegenden Ausführungsbeispiel ein heterogenes Kommunikationsnetz; z.B. ein Verbund aus privaten und öffentlichen Kommunikationsnetzen, mit paketvermittelten Netzabschnitten sowie mit leitungsvermittelten Netzabschnitten. Das Kommunikationsnetz. KN1 umfasst Netzknoten NK1, NK2, NK3 und NK4 als Vermittlungseinrichtungen zum Vermitteln von Verbindungen zwischen an das Kommunikationsnetz KN1 angeschlossene Endgeräten, hier EG1, EG2 und EG3. Durch die Netzknoten NK1,...,NK4 wird weiterhin eine Leistungsmerkmalsteuerung zum Steuern von im Kommunikationsnetz KN1 verfügbaren Leistungsmerkmalen, wie z.B. Rückfrage, Makeln und/oder Transfer, implementiert. Im vorliegenden Ausführungsbeispiel ist das Endgerät EG1 an den Netzknoten NK1, das Endgerät EG2 an den Netzknoten NK4 und das Endgerät EG3 an den Netzknoten NK3 angekoppelt.

Der Netzknoten NK1 ist über einen paketvermittelten, über das Kommunikationsnetz KN2 verlaufenden Netzabschnitt V1 mit dem Netzknoten NK2 gekoppelt, der wiederum über eine leitungsvermittelte, ISDN-basierte TDM-Übertragungsstrecke TDM, z.B. ein öffentliches ISDN-Telefonnetz, an den Netzknoten NK3 angekoppelt ist. Der Netzknoten NK3 ist schließlich mittels eines über das Kommunikationsnetz KN2 verlaufenden, paketvermittelten Netzabschnittes V2 an den Netzknoten NK4 gekoppelt. Die Kommunikationsnetze KN1 und KN2 werden trotz ihrer gemeinsamen Netzabschnitte V1 und V2 von den Endgeräten EG1, EG2 und EG3 sowie von den Netzknoten NK1,... NK4 als logisch getrennte Kommunikationsnetze angesteuert. Bei einer Übertragung von Nutzinformation über das Kommunikationsnetz KN1 wird die Nutzinformation gemäß einem jeweiligen Übertragungsleitungstyp der einzelnen Netzabschnitte V1, TDM und V2 beim Übergang zwischen den einzelnen Netzabschnitten durch die jeweiligen Übergangsnetzknoten in eine jeweils geeignete Übertragungsform, hier TDM-Signale bzw. Internetprotokoll-Datenpakete, konvertiert.

Im vorliegenden Ausführungsbeispiel erlaubt die TDM-Übertragungsstrecke keine Übertragung von Multimediadaten in einer für den vorgegebenen Multimediadienst erforderlichen Dienstgüte. Aus diesem Grund ist der Übertragungsweg über das Kommunikationsnetz KN1 zwischen dem Endgerät EG1 und dem EG3 oder EG2 hinsichtlich dieses Multimediadienstes nicht multimediafähig.

Dem Endgerät EG1 sind eine Rufnummer RN1 sowie eine Internetprotokolladresse IP1 zugeordnet. Entsprechend sind dem Endgerät EG2 eine Rufnummer RN2 und eine Internetprotokolladresse IP2 und dem Endgerät EG3 eine Rufnummer RN3 und eine Internetprotokolladresse IP3 zugeordnet. Die Endgeräte EG1, EG2 und EG3 werden durch die ihnen zugeordneten Rufnummern RN1, RN2 und RN3 jeweils im Kommunikationsnetz KN1 und durch die ihnen jeweils zugeordneten Internetprotokolladressen IP1, IP2 und IP3 jeweils im Kommunikationsnetz KN2 identifiziert.

Zum Aufbau einer Multimediaverbindung vom Endgerät EG1 zum Endgerät EG2 wird erfindungsgemäß vom Endgerät EG1 anhand der Rufnummer RN2 des Zielendgerätes EG2 eine Sprachverbindung als Grundverbindung BC über das nichtmultimediafähige Kommunikationsnetz KN1 zum Endgerät EG2 aufgebaut. Der Aufbau der Grundverbindung BC sowie den Grundverbindungsaufbau unterstützende Leistungsmerkmale werden hierbei von den am Verbindungsaufbau beteiligten Netzknoten NK1, NK2, NK3 und NK4 gesteuert. Die in der Figur durch einen strichlierten Doppelpfeil veranschaulichte Grundverbindung BC umfasst sowohl die paketvermittelten Netzabschnitte V1 und V2 als auch den leitungsvermittelten Netzabschnitt TDM.

Im Rahmen der Grundverbindung BC wird die Internetprotokolladresse IP1 des rufenden Endgerätes EG1 sowie eine Multimediainformation MMI zum gerufenen Endgerät EG2 übertragen. Die Multimediainformation MMI gibt hierbei eine Multimediabefähigung, z.B. Videofähigkeit des Endgerätes EG1 an. Das Endgerät EG2 vergleicht anschließend die empfangene Multimediainformation MMI mit einer eigenen Multimediabefähigung. Sofern das Endgerät EG2 dabei erkennt, dass sowohl EG1 als auch EG2 die Anforderungen des vorgegebenen Multimediadienstes erfüllen, wird durch das Endgerät EG2 anhand der empfangenen Internetprotokolladresse IP1 eine direkte endgerätegesteuerte Multimediaverbindung DMC über das Kommunikationsnetz KN2 zwischen den Endgeräten EG2 und EG1 aufgebaut. Die Multimediaverbindung DMC wird vorzugsweise als so genannte DMC-Verbindung (DMC: Direct Media Connection) realisiert. Während der Aufbau der Multimediaverbindung DMC vom Endgerät EG2 gesteuert wird, kann die aufgebaute Multimediaverbindung DMC von beiden beteiligten Endgeräten EG1 und EG2 wieder abgebaut oder in anderer Weise gesteuert werden.

Nach Aufbau der Multimediaverbindung DMC wird eine im Rahmen des Multimediadienstes zu übertragende Multimedia-Nutzinformation, z.B. Videodaten, über die Multimediaverbindung DMC direkt zwischen den Endgeräten EG1 und EG2 übertragen. Vorzugsweise wird während des Bestehens der Multimediaverbindung DMC keine oder nur verhältnismäßig wenig Nutzinformation über die weiterhin bestehende Grundverbindung BC übertragen. Im Falle eines Abbaus der Multimediaverbindung DMC bei weiterhin bestehender Grundverbindung BC kann die Multimedia-Nutzinformation reduziert und die reduzierte Nutzinformation, z.B. nur Sprachinformation, über die Grundverbindung BC übertragen werden.

Nach Aufbau der endgerätegesteuerten Multimediaverbindung DMC bleibt die Grundverbindung BC parallel zur Multimediaverbindung DMC weiterhin bestehen. Dies erlaubt es, weitere, durch die an der Grundverbindung BC beteiligten Netzknoten NK1,...,NK4 gesteuerte Leistungsmerkmale auf einfache Weise zu aktivieren.

Mittels der Erfindung lassen sich die vermittlungstechnischen Leistungsmerkmale des Kommunikationsnetzes KN1 zur Steuerung von Multimediaverbindungen über das Kommunikationsnetz KN2 in vorteilhafter Weise nutzen. Als Beispiel für eine solche Nutzung eines vermittlungstechnischen Leistungsmerkmals wird im Folgenden eine Aktivierung des Leistungsmerkmals Rückfrage am Endgerät EG1 betrachtet. Es sei hierbei angenommen, dass am Endgerät EG1 bei bestehender Grundverbindung BC und bestehender Multimediaverbindung DMC eine Rückfrage zum Endgerät EG3 unter Eingabe von dessen Rufnummer RN3 aktiviert wird. Infolge der Aktivierung wird durch die Leistungsmerkmalsteuerung des Kommunikationsnetzes KN1, d.h. durch die beteiligten Netzknoten NK1, NK2, NK3 und NK4, zunächst die Grundverbindung BC abgebaut, was erfindungsgemäß bewirkt, dass die parallele Multimediaverbindung DMC durch das erste oder zweite Endgerät ebenfalls abgebaut wird. Daraufhin wird durch die Leistungsmerkmalsteuerung des Kommunikationsnetzes KN1 im Rahmen der Rückfrage eine neue Grundverbindung (nicht dargestellt) über das Kommunikationsnetz KN1 zwischen den Endgeräten EG1 und EG3 aufgebaut. Im Rahmen dieser neuen Grundverbindung wird durch das Endgerät EG1 - wie beim vorhergehenden Aufbau der Grundverbindung BC - die das Endgerät EG1 identifizierende Internetprotokolladresse IP1 sowie die Multimediainformation MMI zum Endgerät EG3 übertragen. Erfindungsgemäß wird dann durch das Endgerät EG3 nach Vergleich der eigenen Multimediabefähigung mit der empfangenen Multimediainformation eine neue endgerätegesteuerte Multimediaverbindung (nicht dargestellt) anhand der empfangenen Internetprotokolladresse IP1 über das Kommunikationsnetz KN2 zum Endgerät EG1 aufgebaut.,Über die aufgebaute neue Multimediaverbindung können die Endgeräte EG1 und EG3 dann Multimedia-Nutzinformation austauschen.

Auf diese Weise induziert die Leistungsmerkmalsteuerung des Kommunikationsnetzes KN1 durch ihren Aufbau der neuen Grundverbindung über das Kommunikationsnetz KN1 (bzw. durch den Abbau der Grundverbindung BC) den parallelen Aufbau der neuen Multimediaverbindung über das Kommunikationsnetz KN2 (bzw. den Abbau der Multimediaverbindung DMC). Im Allgemeinen resultiert eine Aktivierung eines beliebigen Leistungsmerkmals, in dessen Rahmen eine Grundverbindung zwischen Endgeräten des Kommunikationsnetzes KN1 auf- oder abgebaut wird, in einem entsprechenden Auf- bzw. Abbau einer Multimediaverbindung über das Kommunikationsnetz KN2. Auf diese Weise können durch die Leistungsmerkmalsteuerung des Kommunikationsnetzes KN1 Multimediaverbindungen über das Kommunikationsnetz KN2, das selbst über keine entsprechende Leistungsmerkmalsteuerung verfügen muss, gewissermaßen indirekt gesteuert werden. Damit lässt sich eine Vielzahl vermittlungstechnischer Leistungsmerkmale des Kommunikationsnetzes KN1 auch im Rahmen von Multimediaverbindungen über das Kommunikationsnetz KN2 nutzen.

Bei Aktivierung eines Leistungsmerkmals, in dessen Rahmen z.B. nur Sprache, Töne, Ansagen oder andere Nutzinformation, bei der eine Multimediaverbindung nicht benötigt oder gewünscht wird, über das Kommunikationsnetz KN1 übertragen werden, oder wenn nicht multimediafähige Endgeräte zu verbinden sind, wird eine eventuell bestehende Multimediaverbindung durch eines der beteiligten Endgeräte wieder abgebaut und die Nutzinformation dann über die Grundverbindung BC übertragen.

## Patentansprüche

1. Verfahren zum Steuern von Multimediaverbindungen (DMC) zwischen Endgeräten (EG1, EG2), die an ein erstes Kommunikationsnetz (KN1) mit einer Leistungsmerkmalsteuerung und an ein zweites Konimunikatibnsnetz (KN2) zur Übertragung von Multimediadaten gekoppelt sind, wobei
a) die Leistungsmerkmalsteuerung bei Aktivierung eines vermittlungstechnischen Leistungsmerkmals eine Grundverbindung (BC) über das erste Kommunikationsnetz (KN1) zwischen einem ersten Endgerät (EG1) und einem zweiten Endgerät (EG2) steuert,
b) im Rahmen der Grundverbindung (BC) eine das erste Endgerät (EG1) im zweiten Kommunikationsnetz (KN2) identifizierende Adressinformation (IP1) und eine Multimediainformation (MMI) zum zweiten Endgerät (EG2) übermittelt werden,
**dadurch gekennzeichnet, dass**
c) abhängig von einer Multimediabefähigung des zweiten Endgerätes (EG2), von der übermittelten Multimediainformation (MMI) und von der Steuerung der Grundverbindung (BC) anhand der übermittelten Adressinformation (IP1) eine endgerätegesteuerte Multimediaverbindung (DMC) über das zweite Kommunikationsnetz (KN2) zwischen dem ersten und dem zweiten Endgerät gesteuert wird, und
d) im Falle eines Aufbaus der Multimediaverbindung (DMC) eine zu übertragende Nutzinformation über die Multimediaverbindung (DMC) übertragen wird, sowie im Falle eines Nichtaufbaus oder eines Abbaus der Multimediaverbindung (DMC) die Nutzinformation reduziert wird und die reduzierte Nutzinformation über die Grundverbindung (BC) übertragen wird.

2. Verfahren nach Anspruch 1,
**dadurch gekennzeichnet,**
**dass** ein Aufbau der Grundverbindung (BC) durch die Leistungsmerkmalsteuerung einen Aufbau der Multimediaverbindung (DMC) bewirkt, und
**dass** die Grundverbindung (BC) nach Aufbau der Multimediaverbindung (DMC) zum Aktivieren weiterer Leistungsmerkmale bestehen bleibt.

3. Verfahren nach einem der vorhergehenden Ansprüche,
**dadurch gekennzeichnet,**
**dass** das erste und das zweite Kommunikationsnetz (KN1, KN2) gemeinsame Übertragungsstrecken (V1, V2) aufweisen und durch das erste oder zweite Endgerät (EG1, EG2) als logisch verschiedene Kommunikationsnetze angesteuert werden.

4. Verfahren nach einem der vorhergehenden Ansprüche,
**dadurch gekennzeichnet,**
**dass** durch die Multimediainformation (MMI) eine Multimediabefähigung des ersten Endgeräts (EG1), eine Dienstgüteanforderung für die Multimediaverbindung (DMC), ein Multimediatyp der Multimediaverbindung (DMC) und/oder eine für die Multimediaverbindung (DMC) erforderliche Multimediabefähigung des zweiten Endgerätes (EG2) spezifiziert wird.

5. Endgerät mit vorgegebener Multimediabefähigung zum Steuern von Multimediaverbindungen zu Endgeräten, die an ein erstes Kommunikationsnetz (KN1) mit einer Leistungsmerkmälsteüerung und an ein zweites Kommunikationsnetz (KN2) zur Übertragung von Multimediadaten gekoppelt sind, mit
a) einem Verbindungserkennungsmodul zum Erkennen einher durch die Leistungsmerkmälsteuerüng gesteuerten Grundverbindung (BC) über das erste Kommunikationsnetz (KN1) zu einem ersten Endgerät (EG1) und zum Empfangen einer das erste Endgerät (EG1) im zweiten Kommunikationsnetz (KN2) identifizierenden Adressinformation (IP1) sowie einer Multimediainformation (MMI),
**gekennzeichnet durch,**
b) eine mit dem Verbindungserkennungsmodul gekoppelten Verbindungssteuerung zum
i) Steuern einer Multimediaverbindung (DMC) anhand der empfangenen Adressinformation (IP1) über das zweite Kommunikationsnetz (KN2) zum ersten Endgerät (EG1) in Abhängigkeit von der vorgegebenen Multimediabefähidung, von der empfangenen Multimediainformation (MMI) und von der erkannten Grundverbindung (BC) sowie zum
ii) Übertragen einer Nutzinformation über die Multimediaverbindung (DMC) im Falle eines Aufbaus der Multimediaverbindung (DMC) und zum
iii) Reduzieren der Nutzinformation und zum Übertragen der reduzierten Nutzinformation über die Grundverbindung (BC) im Falle eines Nichtaufbaus oder eines Abbaus der Multimediaverbindung (DMC).

## Claims

1. Method for controlling multimedia connections (DMC) between terminals (EG1, EG2) coupled to a first communication network (KN1) having a feature controlling means and to a second communication network (KN2) for transmitting multimedia data, wherein
a) upon activation of a call processing feature the feature controlling means controls a basic connection (BC) between a first terminal (EG1) and a second terminal (EG2) via the first communication network (KN1),
b) within the scope of the basic connection (BC), address information (IP1) identifying the first terminal (EG1) in the second communication network (KN2) and multimedia information (MMI) is conveyed to the second terminal (EG2),
**characterised in that**
c) a terminal-controlled multimedia connection (DMC) between the first and second terminal via the second communication network (KN2) is controlled as a function of a multimedia enabling of the second terminal (EG2) and as a function of the multimedia information (MMI) conveyed and of controlling of the basic connection (BC), using the address information (IP1) conveyed and
d) in the event of a setting-up of the multimedia connection (DMC) user information to be transmitted is transmitted via the multimedia connection (DMC), as well as in the event of the multimedia connection (DMC) not setting-up or breaking down, the user information is reduced and the reduced user information is transmitted via the basic connection (BC).

2. Method according to claim 1,
**characterised in that**
a setting-up of the basic connection (BC) by the feature controlling means will effect a setting-up of the multimedia connection (DMC), and
the basic connection (BC) will remain established after the multimedia connection (DMC) has been set up for activating further features.

3. Method according to one of the preceding claims,
**characterised in that**
the first and second communication network (KN1, KN2) have common transmission links (V1, V2) and are accessed by the first or second terminal (EG1, EG2) as logically different communication networks.

4. Method according to one of the preceding claims,
**characterised in that**
a multimedia enabling of the first terminal (EG1), requesting of a quality-of-service for the multimedia connection (DMC), a multimedia type of the multimedia connection (DMC) and/or multimedia enabling, necessary for the multimedia connection (DMC), of the second terminal (EG2) is specified by means of the multimedia information (MMI).

5. Terminal having pre-specified multimedia enabling for controlling multimedia connections to terminals coupled to a first communication network (KN1) having a feature controlling means and to a second communication network (KN2) for transmitting multimedia data, having
a) a connection detection module for detecting a basic connection (BC), controlled by the feature controlling means, to a first terminal (EG1) via the first communication network (KN1) and for receiving address information (IP1) identifying the first terminal (EG1) in the second communication network (KN2) and receiving multimedia information (MMI),
**characterised by**
b) a connection controller coupled to the connection detection module for
i)controlling a multimedia connection (DMC), using the received address information (IP1), to the first terminal (EG1) via the second communication network (KN2) as a function of the pre-specified multimedia enabling, of the received multimedia information (MMI), and of the detected basic connection (BC) and for
ii) transmitting user information via the multimedia connection (DMC) in the case of a setting-up of the multimedia connection (DMC) and for
iii) reducing the user information and transmitting the reduced user information via the basic connection (BC) in the case of the multimedia connection (DMC) not setting-up or breaking down.

## Revendications

1. Procédé pour la commande de liaisons multimédia (DMC) entre des terminaux (EG1, EG2), qui sont rattachés à un premier réseau de communication (KN1) avec une commande de service complémentaire et à un second réseau de communication (KN2) pour la transmission de données multimédia,
a) la commande de service complémentaire commandant, en cas d'activation d'un service complémentaire de commutation, une liaison de base (BC) via le premier réseau de communication (KN1) entre un premier terminal (EG1) et un second terminal (EG2),
b) une information d'adresse (IP1) identifiant le premier terminal (EG1) dans le second réseau de communication (KN2) et une information multimédia (MMI) étant transmise au second terminal (EG2) dans le cadre de la liaison de base (BC),
**caractérisé en ce que**,
c) en fonction d'une capacité multimédia du second terminal (EG2), de l'information multimédia (MMI) transmise et de la commande de la liaison de base (BC), une liaison multimédia (DMC) commandée par terminal est commandée par l'intermédiaire du second réseau de communication (KN2) entre le premier et le second terminal à l'aide de l'information d'adresse (IP1) transmise, et
d) dans le cas d'un établissement de la liaison multimédia (DMC), une information utile à transmettre est transmise via la liaison multimédia (DMC), et, dans le cas d'un non-établissement ou d'une déconnexion de la liaison multimédia (DMC), l'information utile est réduite et l'information utile réduite est transmise via la liaison de base (BC).

2. Procédé selon la revendication 1,
**caractérisé en ce que**
un établissement de la liaison de base (BC) occasionne par la commande du service complémentaire un établissement de la liaison multimédia (DMC), et
**en ce que** la liaison de base (BC) est conservée après l'établissement de la liaison multimédia (DMC) pour l'activation d'autres services complémentaires.

3. Procédé selon l'une quelconque des revendications précédentes,
**caractérisé en ce que**
le premier et le second réseau de communication (KN1, KN2), présentent des tronçons de transmission (V1, V2) communs et sont activés par le premier ou le second terminal (EG1, EG2) en tant que réseaux de communication logiquement différents.

4. Procédé selon l'une quelconque des revendications précédentes,
**caractérisé en ce qu'**une capacité multimédia du premier terminal (EG1), une demande de qualité de service pour la liaison multimédia (DMC), un type multimédia de la liaison multimédia (DMC) et/ou une capacité multimédia requise du deuxième terminal (EG2) pour la liaison multimédia (DMC) sont spécifiés par l'information multimédia (MMI).

5. Terminal avec capacité multimédia prédéfinie pour la commande de liaisons multimédia avec des terminaux, qui sont rattachés à un premier réseau de communication (KN1), avec une commande de service complémentaire et à un second réseau de communication (KN2) pour la transmission de données multimédia, comprenant
a) un module de reconnaissance de liaison pour la reconnaissance d'une liaison de base (BC) via le premier réseau de communication (KN1) avec un premier terminal (EG1), commandée par la commande de service complémentaire et pour la réception d'une information d'adresse (IP1) identifiant le premier terminal (EG1) dans le second réseau de communication (KN2) ainsi que d'une information multimédia (MMI)
**caractérisé par**
b) une commande de liaison couplée avec le module de reconnaissance de liaison pour
i) commande d'une liaison multimédia (DMC) via le second réseau de communication (KN2) avec le premier terminal (EG1), à l'aide de l'information d'adresse (IP1) reçue, en fonction de la capacité multimédia prédéfinie, de l'information multimédia (MMI) reçue et de la liaison de base (BC) reconnue ainsi que pour
ii) la transmission d'une information utile via la liaison multimédia (DMC) dans le cas d'un établissement de la liaison multimédia (DMC) et pour
iii) la réduction de l'information utile et pour la transmission de l'information utile réduite via la liaison de base (BC) dans le cas d'un non-établissement ou d'une déconnexion de la liaison multimédia (DMC).
